# EUROPEAN PATENT APPLICATION

(11) **EP 1 902 628 A1**
(43) Date of publication of application: **26.03.2008**
(21) Application number: 06019397.6
(22) Date of filing: 15.09.2006
(51) Int. Cl.: A23F 5/16

(54) **Aroma stabilizing method**

(71) Applicant: Nestec S.A., 1800 Vevey (CH)
(72) Inventor: Blank, Imre, 1073 Savigny (CH); Milo, Christian, 1073 Savigny (CH); Kerler, Josef, 1009 Pully (CH); Mueller, Christoph, PRINCETON, New Jersey 08540 (US); Hofmann, Thomas, D-48161 MUENSTER-ROXEL (DE)
(74) Representative: Rupp, Christian

(57) **Abstract**

The present invention provides a method for stabilising the aroma of aroma-rich foodstuffs and their products by reducing the amount of phenols derived from decomposition of polyphenols contained therein. The invention also describes aroma-stabilized foodstuffs as well as their products having a desirable flavour.

## Description

### Field of the Invention

The invention relates to a method for stabilizing the aroma of aroma-rich foodstuffs, in particular coffee and their products to improve their flavouring, taste or other desirable sensory characteristics. The invention also relates to aroma-stabilized foodstuffs as well as their products having a desirable flavour.

### Background of the Invention

Aromas are an important part of many products since a consumer associates certain aromas with certain products. If the product lacks the aroma associated with it, consumer perception of the product is adversely affected. This association is very strong in the field of coffee products, but also in other food categories. This is particularly a problem in the field of soluble coffee powders, although it also exists in other fields.

For example, delicate coffee aroma is often degraded, or partially lost during the processing as seen in instant coffee and ready-to-drink manufacturing methods. Also, coffee aroma is known to be very unstable. As coffee aroma degrades, it generates unpleasant and non-coffee-like notes that are undesirable. This degradation substantially reduces the perceived quality of the product. For this reason, special attention must be paid to the preparation and storage of flavouring components such as coffee aroma so that desirable aroma components are enhanced or undesirable components are reduced or eliminated.

Conventionally, flavour protective agents can be added to aroma-rich food or beverage products in order to preserve, maintain or improve the flavour characteristics of such products. The prior art describes sulphur containing compounds as flavour protective agents.

In addition, the prior art proposes processes where the coffee aromas are recovered at several points during processing of the soluble coffee and most commonly during and after grinding of the roasted beans as well as by steam stripping the coffee extract prior to concentration and drying.

It has been shown, however, that the processes and approaches of the prior art are not entirely satisfactory with respect to enhancing desirable aroma components, reducing undesirable components and preserving volatile flavouring components. Many of the conventional aroma treated foods still fail to have the desired flavour, taste and other sensory characteristics.

It is object of the present invention to provide a technology to further stabilize the aroma of aroma-rich foodstuffs to provide improved high aroma qualities in terms of freshness and persistent aroma.

### Summary of the Invention

The invention provides a method for stabilizing the aroma of aroma-rich foodstuffs and their products by reducing the amounts of phenols derived from decomposition of polyphenols contained therein.

It has been surprisingly found that the method of the present invention allows a significant reduction of specific phenols and thus provides significantly larger amounts of aroma components, which get usually lost during processing of the aroma-rich foodstuffs such as coffee, tea and cocoa. The major benefit is improved aroma-rich foodstuff quality in terms of freshness, persistent aroma, etc. upon reconstitution and consumption as well as a significantly extended shelf-life.

Reduction of the amount of phenols contained in the aroma-rich foodstuffs predominantly results in a significant reduction of hydroxyhydroquinone (HHQ) which is a phenol generated upon roasting of the aroma-rich foodstuffs such as coffee. HHQ is a non-volatile phenol which traps thiols and generates hydrogen peroxides leading to degradation of coffee flavour compounds and thus to a distortion of the overall coffee flavour.

Thiols are known to be key odorants in coffee aroma. One of the most important thiols that contribute to coffee aroma is 2-furfurylthiol (FFT). It has been surprisingly found that a significant reduction of the HHQ amount avoids losses of coffee thiols such as FFT. The reduction of HHQ in roasted coffee solutions is achieved by treatments leading to the degradation or removal of HHQ so that the thiols remain in the aroma-rich coffee to display the whole range of aroma.

The invention further provides aroma-stabilized foodstuffs having a reduced content of phenols, particularly hydroxyhydroquinone (HHQ), and a higher content of thiols such as FFT. The aroma-stabilized foodstuffs of the present invention have an improved aroma quality in terms of freshness, persistent aroma, etc. upon reconstitution and consumption as well as a significantly extended shelf life.

The invention also provides aroma-stabilized foodstuffs obtainable by the method of the invention.

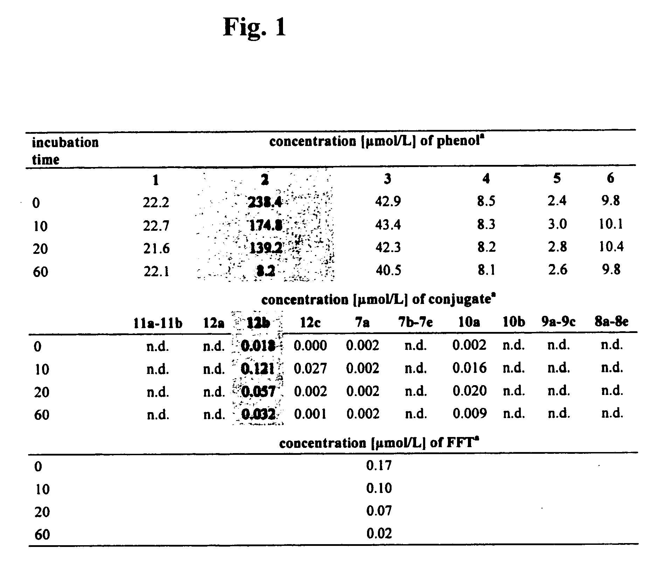

The present invention is further illustrated by means of the accompanying figure 1.

Figure 1 is a table illustrating the concentrations of 2-furfurylthiol (FFT), di-/trihydroxybenzenes and phenol/FFT-conjugates during storage of coffee beverages.

### Detailed Description of the Preferred Embodiments of the Invention

The principles of the invention are now illustrated for the preferred embodiments where coffee aroma is described as the most preferred aroma. Coffee aroma is used as a flavouring agent for various foods or beverages and particularly in soluble coffee, coffee concentrate and ready-to-drink coffee beverages to improve the flavour, taste and other sensory characteristics of the beverages. In general, however, the improved aromas of this invention are intended to be a generic definition of all types of aromas, including also chocolate or cocoa aroma or tea aroma and many other aromas, which can be found in aroma-rich foodstuffs.

The method of the invention is applicable to the total aroma-rich foodstuff or after having removed the aroma from this foodstuff. Preferably, the foodstuff is treated after having removed the aroma.

Preferably, the aroma-rich foodstuffs are coffee, tea and cocoa and their products. More preferred, the aroma of coffee is stabilized by the process of the present invention in the final product.

The aroma stabilizing method of the present invention comprises reducing the amount of phenols derived from decomposition of polyphenols contained in the aroma-rich foodstuffs, which usually arise when roasting the natural foodstuff materials such as coffee beans, tea leaves and cocoa beans.

In a preferred embodiment of the invention, the amount of phenols is reduced to a range between 30 to almost 100%. In a particularly preferred embodiment, the amount of phenols is reduced by at least 50%, most preferred to an extent of almost 100% to achieve an optimum.

The phenols in coffee are generally decomposition products of chlorogenic acids such as 5-O-caffeoyl quinic acid, which is the major phenolic compound found in coffee. Tea and cocoa contain other types of polyphenols. During the roasting process 5-O-caffeoyl quinic acid is thermally decomposed to give hydroxyhydroquinone (HHQ) and other di- and trihydroxybenzenes. Examples of the di- and trihydroxybenzenes are pyrogallol, catechol, 4-ethylcatechol, 4-methylcatechol and 3-methylcatechol.

Hydroxyhydroquinone (HHQ) has been shown to play the important role in the degradation of thiols, which are known to be key odorants in coffee aroma. HHQ traps the thiols by forming conjugates and generates hydrogen peroxides leading to degrading of coffee flavour compounds and thus to a distortion of the overall coffee flavour. One of the crucial thiols is 2-furfurylthiol (FFT) present, for example, in coffee.

Figure 1 shows the correlation of the concentrations [µmol/L] of 2-furfurylthiol (FFT), di-/trihydroxybenzenes and phenol/FFT-conjugates during storage of coffee beverages.

The phenols tested are 1 = pyrogallol, 2 = hydroxyhydroquinone, 3 = catechol, 4 = 4-ethylcatechol, 5 = 4-methylcatechol und 6 = 3-methylcatechol.

The concentrations of the phenols were determined in a standard coffee beverage (54 g/L). n.d. means not detectable.

The concentration of hydroxyhydroquinone (HHQ) in the coffee beverage is 238,4 µmol/L immediately after brewing the coffee. The amount of HHQ decreases to a fairly low value after 60 minutes. However, after ten minutes, the concentration of HHQ is still 174,8 µmol/L, corresponding to a loss of about 27% of HHQ. The other di-/trihydroxybenzenes are present in the coffee brew in much lower amounts than the HHQ and do not change so much in concentration compared to HHQ.

The concentration [µmol/L] of the phenol/FFT-conjugates clearly indicates very high values for the HHQ/FFT-conjugate. After 10 minutes storage, the conjugate concentration is increased to 0.121 µmol/L (67%). In parallel, significant amounts of FFT were lost, that is from 0.17 µmol/L to 0.10 µmol/L (41%). The other phenol conjugates are present in much minor amounts, partially in amounts, which are no more detectable. This shows the importance of HHQ in the degradation of thiols.

As there is a large excess of HHQ compared to FFT, it is preferred according to the process of the present invention to reduce the amount of hydroxyhydroquinone (HHQ) while it is advantageous to remove the other di- and trihydroxybenzenes simultaneously. As a result, the original FFT is maintained.

In a preferred embodiment of the present invention, the amount of hydroxyhydrochinone (HHQ) is reduced by at least 30%, more preferred by at least 50%, particularly preferred to an extent up to almost 100%.

The amount of phenols is reduced by chemical and/or physical means to remove or inactivate the phenols.

In the following, a number of options is listed for a significant reduction of the phenol amount, in particular the HHQ amount, to avoid losses of coffee thiols such as FFT. The processes indicated are intended to lead to a degrading or removal of HHQ.
i) Physical removal of the phenols by filtration. Suitable filtrations means are, for example, membranes, molecular imprints (MIPs) and dialysis membranes;
ii) Separation of the phenols by ion-exchange resins such as anion exchange resins, metal cation chelate resins;
iii) Decomposition of the phenols induced by heat, change in pH, oxidation for example, by forced exposure to oxygen and enzyme treatment;
iv) Chemical trapping of the phenols by using nucleophils. Examples of suitable nucleophils are selected from sulfur-containing compounds such as SO₂, a sulphite or a substance that contains or generates an amine or an amino acid such as cysteine;
v) Reduction of oxygen generated in coffee (or any other aroma-rich foodstuff) processing to reduce the formation of HHQ-adducts and
vi) Selective extraction of the phenols by supercritical CO₂.

The methods described under i) to vi) may be used singly or may be also used in combination. The methods can be integrated at any stage in conventional foodstuff processing, as can be easily realized by the person skilled in the art.

The method of the present invention is applicable to aroma-rich foodstuffs of any provenience. Particularly preferred are aroma-rich foodstuffs such as coffee, tea and cocoa as well as their products. Particularly preferred is coffee the aroma of which is perfectly stabilized by the method of the present invention.

As an example, roasted and ground coffee particles are extracted with water to form a solution. Volatiles are stripped from the solution with steam to obtain an aroma concentrate. The extract solution containing the phenols is then treated with the above chemical/physical means.

In another embodiment, the aroma is first stripped from the roasted and ground coffee and then the coffee particles are subjected to the water extraction. In both cases, the solution treated with the chemical/physical means being essentially devoid of the phenols is then combined with the aroma concentrate.

Preferably, the solution treated with the chemical/physical means, which is essentially free of phenols, in particular HHQ, is combined with the aroma concentrate. If desired, the aroma components in the aroma liquid may be concentrated prior to being added to the concentrated extract. Concentration may be carried out using conventional procedures such as partial condensation, rectification, membrane concentration and freeze concentration. Also, the frost obtained from the cryogenic aroma collector may be added to the concentrated extract.

The aromatized extract is then dried in usual manner to provide an aromatized, soluble coffee powder, for example, by spray- or freeze-drying. Of course, the aroma liquid and aroma frost may be used for other aromatization purposes.

The method of the present invention is particular suitable for stabilizing coffee aroma for beverages selected from soluble coffee, coffee concentrate and ready-to-drink coffee.

Aromatized, soluble coffee powder may be reconstituted as usual to provide a coffee beverage.

The present invention also provides aroma-stabilized foodstuffs having a reduced content of phenols derived from decomposition of polyphenols. Preferably, the aroma-stabilized foodstuffs are essentially free of said phenols, with a content of phenols being reduced to 30 to almost 100%. Most preferred, the aroma-stabilized foodstuffs of the present invention are those where the content of phenols is reduced to almost 100%.

Preferably, the aroma stabilized foodstuff of the present invention is coffee essentially free of hydroxyhydroquinone (HHQ) and, optionally, other di- and trihydroxybenzenes. Examples of the di- and trihydroxybenzenes are as mentioned above.

A number of different specific beverage-forming components are provided by dramatically reducing the content of phenols, specifically hydroxyhydroquinone (HHQ). One product is a coffee concentrate in liquid form. Another product is ready-to-drink coffee. Included is also soluble coffee obtained by freeze-drying or spray-drying the coffee concentrate. The aromatized, soluble coffee powder may then be reconstituted as usual to provide a coffee beverage.

Other aroma-stabilized products of the present invention are, for example, those based on tea, cocoa and their products.

The present invention also provides an aroma-stabilized foodstuff obtainable by a method as explained above.

Specific examples of the invention are now described to further illustrate the invention.

### Examples

### Example 1

A roast and ground ("R&G") 100% Colombia coffee is extracted with water to form a coffee extract. The extract is passed through a steam stripping column where the volatile flavor/aroma components are stripped out, condensed and collected as aroma distillate, with about 10g aroma distillate collected per 100g of R&G coffee.

The HHQ concentration has been measured to give 21.6 mg/l HHQ in the extract.

This extract is then submitted to a forced oxygen exposure, by bubbling oxygen through the solution (700 ml) with a constant flow rate of -20 ml/min. Preferably this treatment is done at elevated temperatures, e.g. 60°C for up to 2 hours.

The HHQ concentration has been measured to provide 9.8 mg/l HHQ in the extract as treated above. This corresponds to a decrease of HHQ by approx. 50% in the coffee extract and represent a significant reduction of HHQ compared to the untreated extract.

The extract was evaporated, aroma added and then dried to a soluble coffee powder using normal process conditions known to the person skilled in the art. Upon reconstitution of this powder with hot water, the resulting beverage was perceived as having a longer lasting aroma with increased freshness compared to the extract without oxygen treatment.

## Claims

1. A method for stabilising the aroma of aroma-rich foodstuffs and their products by reducing the amount of phenols derived from decomposition of polyphenols contained therein.

2. The method of claim 1 wherein the amount of phenols is reduced to 30 to almost 100 %.

3. The method of claim 2 wherein the amount of phenols is reduced to an extent of almost 100 %.

4. The method of any one of claims 1 to 3 wherein the amount of phenols is reduced by chemical and/or physical means to remove or inactivate the phenols.

5. The method of any one of claims 1 to 4 wherein the amount of phenols is reduced by filtration, separation by ion exchange resins, decomposition by heat, change in pH, oxidation and enzyme treatment, use of nucleophils, reduction of oxygen and/or selective extraction by supercritical CO₂.

6. The method of claim 5 wherein the phenols are filtered off by using membranes, molecular imprints or dialysis membranes.

7. The method of claim 5 wherein the nucleophils are selected from SO₂, a sulfite or a substance that contains or generates an amine or an amino acid.

8. The method of any one of claims 1 to 7 wherein the aroma-rich foodstuffs are coffee, tea and cocoa and their products.

9. The method of claim 8 wherein the aroma of coffee is stabilized.

10. The method of claim 9 wherein the phenols are decomposition products of chlorogenic acids and comprise hydroxyhydroquinone (HHQ) and other di- and trihydroxybenzenes.

11. The method of claim 10 wherein the amount of hydroxyhydroquinone (HHQ) is reduced.

12. The method of any of claims 8 to 11 wherein roasted and ground coffee particles are extracted with water to form a solution, volatiles are stripped from the solution with steam to obtain an aroma concentrate and the solution is treated with the chemical/physical means.

13. The method of claim 12 wherein the solution treated with the chemical/physical means is combined with the aroma concentrate.

14. The method of claim 12 wherein the aroma of coffee is stabilized for beverages selected from soluble coffee, coffee concentrate and ready-to-drink coffee.

15. Aroma-stabilized foodstuff having a reduced content of phenols derived from decomposition of polyphenols.

16. The aroma-stabilized foodstuff of claim 15 wherein the content of phenols is reduced to 30 to almost 100 %.

17. The aroma-stabilized foodstuff of claim 16 wherein the content of phenols is reduced to almost 100 %.

18. The aroma-stabilized foodstuff of any one of claims 15 to 17 being selected from coffee, tea and cocoa and their products.

19. The aroma-stabilized foodstuff of claim 18, which is coffee.

20. The aroma-stabilized foodstuff of claim 19 wherein the phenols comprise hydroxyhydroquinone (HHQ) and other di- and trihydroxybenzenes.

21. The aroma-stabilized foodstuff of claim 20 wherein the content of hydroxyhydroquinone (HHQ) is reduced.

22. The aroma-stabilized foodstuff of any one of claims 18 to 21 being selected from soluble coffee, coffee concentrate and ready-to-drink coffee.

23. Aroma-stabilized foodstuff obtainable by a method as defined in any one of claims 1 to 14.
